# EUROPEAN PATENT SPECIFICATION

(11) **EP 3 011 233 B1**
(45) Date of publication and mention of the grant of the patent: **09.08.2017**
(21) Application number: 14744168.7
(22) Date of filing: 19.06.2014
(51) Int. Cl.: F24F 11/00, F24F 11/02

(54) **ELECTRONIC MEASURING, CONDITIONING AND REGULATING INSTRUMENT, AND CORRESPONDING METHOD OF PRODUCTION**
ELEKTRONISCHES MESS-, KONDITIONIERUNGS- UND REGELUNGSINSTRUMENT SOWIE ENTSPRECHENDES VERFAHREN ZUR HERSTELLUNG
INSTRUMENT ÉLECTRONIQUE DE MESURE, DE CONDITIONNEMENT, ET DE RÉGULATION, ET PROCÉDÉ DE PRODUCTION CORRESPONDANT

(30) Priority: 20.06.2013 IT UD20130085
(43) Date of publication of application: 27.04.2016
(73) Proprietor: ELIWELL CONTROLS SRL CON UNICO SOCIO, 32010 PIEVE D'ALPAGO (BL) (IT)
(72) Inventor: DE ZORZI, Luca, I-32020 La Valle Agordina (IT); DAL FARRA, Stefano, I-32100 Belluno (IT)
(74) Representative: Petraz, Gilberto Luigi
(86) International application number: PCT/IB2014/062432
(87) International publication number: WO 2014/203194

(56) References cited:
- EP-A2- 2 043 417
- JP-A- H 118 476
- JP-A- 2009 236 376
- JP-A- 2011 049 723
- US-A- 5 485 954

## Description

### FIELD OF THE INVENTION

The present invention concerns an electronic measuring, conditioning and regulating instrument.

The invention is applied in the field of production of electronic instruments suitable to be used as regulators and/or measurers in general, and in particular in the field of regulating and conditioning temperature, pressure and/or humidity.

Said instruments essentially comprise a front-piece with a display unit and setting and command means, and a box-like container, with means to interface and connect to the outside, which houses within it the necessary components for the functioning of the instrument.

The invention offers an economical, rational and versatile solution to problems relating to the production of a range of instruments that are different in size and performance.

The invention also concerns the method to produce said instrument.

### BACKGROUND OF THE INVENTION

Instruments of the electronic type are known, used to measure and condition the parameters of a room, for example its temperature and humidity, or of a cooling unit, a heating plant or other. Patent document JP-2009236376-A discloses such an instrument according to the preamble of claim 1. Such instruments are normally applied on a panel, in a suitable hole or aperture, making the front-piece protrude in which the display unit and the command and setting members are made.

Inside the hole or aperture the box-like container is positioned, inside which the electronic components needed for the functioning of the instrument are positioned, for feeding it, for connecting it to the external members that it manages and commands, and for possible interface with data acquisition and remote control means.

Known instruments are normally different from each other based on the type of application and the performance they have to provide, inside a range that goes from the simplest instrument, which only performs minimum or basic functions, to the most evolved and complex instrument, suitable to perform a plurality of functions and services, and possibly suitable to interface with external data acquisition and remote control instruments.

Traditional instruments of this type normally consist of the following components:
- a first printed circuit (or first PCB, Printed Circuit Board), made on a board located during use orthogonal to the front-piece, on which at least the components for feeding and powering the instrument are normally mounted;
- a second printed circuit (or second PCB) disposed parallel to the front-piece or the display unit, and/or applied thereto, which supports at least the display components and which can also, in relation to the specific design solution, support the smart part of the instrument, that is, the microprocessor, and the components suitable to perform the logic processing operations and possible signal transformation.

The logic and processing components can also be mounted, wholly or partly, on the first printed circuit; this is irrelevant for the purposes of the present description.

One disadvantage of this type of instrument concerns the overall production times, and hence production costs, of the instrument, which are mainly constrained, though not only, by the steps of making and reciprocally assembling the two printed circuits.

Indeed, in the conventional production process of this type of instrument, either the two PCBs are produced separately, each in its own production line, with application and welding of the respective components, or the two PCBs are produced on the same line at temporally distinct intervals, which causes an increase in the times as a consequence of the duplication of all the steps required to assemble a single PCB.

A subsequent assembly of the two PCBs is then required, welding them along an edge so as to dispose them at 90° with respect to each other.

Subsequently, the combination thus obtained of the two PCBs welded together is inserted into the box-like container and associated to the display front-piece so that, during use, the first PCB, which is bigger, is disposed substantially horizontal and housed in the box-like container, while the second PCB, which is smaller, is disposed behind and parallel to the display front-piece.

This substantially standard procedure entails a plurality of disadvantages in terms of increasing the production times, corresponding costs, the need to instal and equip two distinct assembly lines, or duplication of times if only one line is used, the need to provide the final welding step with consequent possible increase in defective pieces, etc.

Obviously, all this reflects on the overall productivity of the production line.

One purpose of the present invention is to obtain an electronic instrument of the type described above in which production times and costs are reduced, the incidence of imprecisions and production defects are limited, and hence the discard of pieces, and good reliability of the final product is guaranteed.

Another purpose is to guarantee high standardization of the products obtained.

The Applicant has devised and embodied the present invention to overcome these shortcomings and to obtain other advantages as shown hereafter.

### SUMMARY OF THE INVENTION

The present invention is set forth and characterized in the main claims, while the dependent claims describe variants to the main inventive idea.

In accordance with the above purposes, an electronic measuring, conditioning and regulating instrument according to the present invention comprises, conventionally, a display front-piece, a box-like container, a first PCB disposed during use inside the box-like container, and a second PCB associated to the front-piece and disposed during use substantially parallel and in proximity thereto, and substantially orthogonal to the first PCB.

Feed and power components of the instrument are typically mounted on the first PCB, while components used for viewing are typically mounted on the second PCB. The logic and signal processing components can be mounted either on the second PCB or on the first PCB, or partly on the first and partly on the second, depending on their design specifications.

According to a characteristic aspect of the present invention, the two PCBs, first and second, are made starting from a single plate made in two parts and comprising, in an intermediate zone thereof, flexible bending means which allow, during use, to bend the first PCB with respect to the second PCB along at least a bending line so as to define the positions of use, orthogonal with respect to each other, of said first and second PCB.

The use of a single plate with flexible bending means allows, during the production step, to achieve all the assembling and welding operations of the components in a single working line and/or without duplicating production and assembly times, and operating on a single plane, disposing the two elements which make up the first and second PCB aligned with respect to each other.

Once the mounting, assembling and welding operations of the components have been carried out, it is only necessary to bend the plate along the at least one bending line, to define the two positions of use of the two PCBs when they are assembled inside the box-like container.

As we said, typically, in this specific case, the second PCB is smaller and has a normally vertical position of use, facing and in proximity to the display unit, while the first PCB is bigger and is positioned inside the box-like container in order to support at least the power and feed components.

It comes within the scope of the present invention that the plate can have two or more bending lines to define, during use, three or more separate PCBs bent with respect to each other, for example the first associated to the front-piece, the second disposed orthogonal inside the box-like container and a third orthogonal to the second and associated to a closing cap opposite the front-piece.

According to one form of embodiment, the flexible bending means consist of an elastic foil disposed substantially centrally along the bending line which defines the first and the second PCB.

According to another form of embodiment, the flexible bending means consist of two or more elastic foils disposed along the bending line.

### BRIEF DESCRIPTION OF THE DRAWINGS

These and other characteristics of the present invention will become apparent from reading the preferential form of embodiment of the invention, taken with reference to the attached drawings wherein:
- fig. 1 is a three-dimensional view of a measuring, conditioning and regulating instrument where the present invention is used;
- fig. 2a shows a form of embodiment of a plate with flexible means used in the present invention;
- fig. 2b shows a variant of fig. 2a;
- figs. 3a, 3b and 4 show a sequence in the assembly of the instrument according to the present invention.

To facilitate comprehension, the same reference numbers have been used, where possible, to identify identical common elements in the drawings.

### DETAILED DESCRIPTION OF SOME FORMS OF EMBODIMENT

We shall now refer in detail to some forms of embodiment of the invention, of which some examples are shown in the attached drawings. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

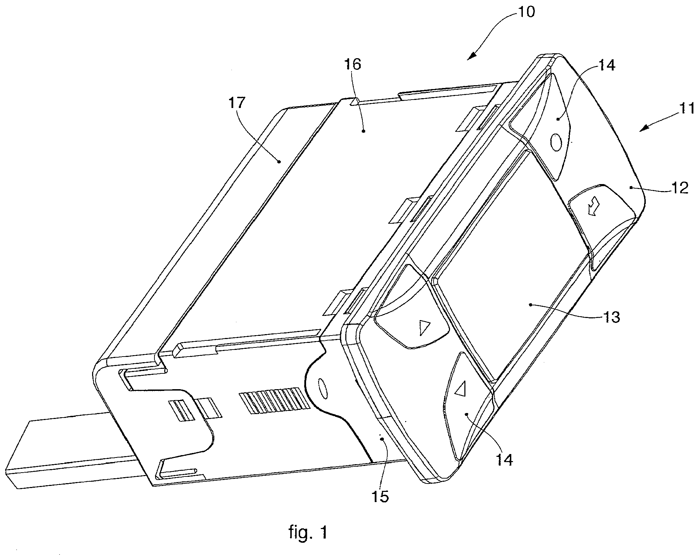

Fig. 1 is used to describe forms of embodiment of an electronic measuring, conditioning and regulating instrument according to the present invention, indicated in its entirety by the reference number 10.

The electronic instrument 10 is provided in this case with a front-piece 11 that includes a front mask 12, which defines a viewer 13 of the display unit, and keys 14.

The keys 14 can also be made directly on the front mask 12.

Moreover, the front-piece 11 can provide, on its rear part, a containing wall 15 which can have a variable length or depth depending on the use of the electronic instrument 10.

According to some forms of embodiment, the instrument 10 comprises a box-like container 16 with a typically parallelepiped shape, closed at the rear, in the specific case shown here merely by way of example, by a closing cap 17.

The assembly of the front-piece 11 and the box-like container 16, and possibly with the closing cap 17, can be achieved in any known way, for example by simple interference, by fixed joint, by pins, tongues, pegs or in any other way, which is irrelevant for the purposes of the present invention.

A printed circuit 20 that supports the components 21 necessary for the functioning of the electronic instrument 10 and for the performance of its functions is housed inside the box-like container 16 and partly in the front-piece 11.

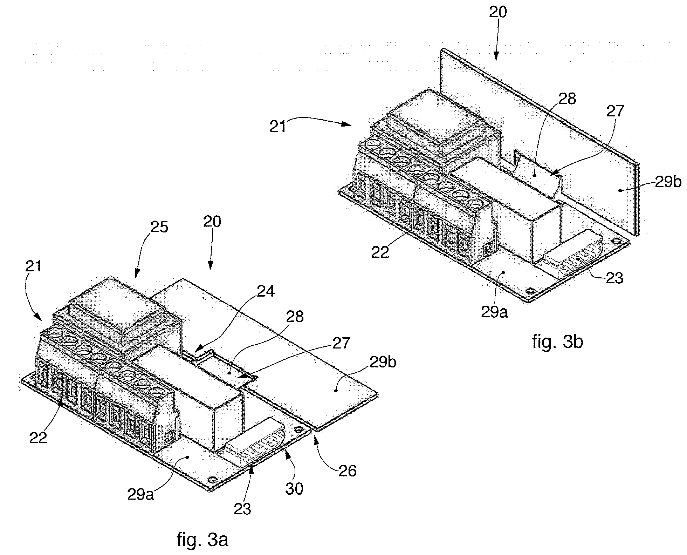

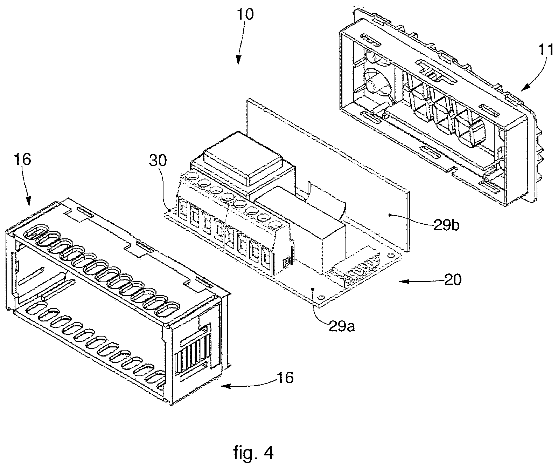

Generally, merely by way of example, figs. 3a, 3b and 4 show some components such as connectors 22, sockets 23, power 24 and processing 25 components, present, in this case shown merely by way of example, on board the printed circuit 20. The drawings do not show part of the electronic, logic and processing components, the paths, tracks and other known components that are normally present on the printed circuit 20 to perform the functions of the instrument 10.

The printed circuit 20 consists of a plate 30 that, in one of its intermediate zones, has a bending line 26 along which flexible bending means 27 are disposed, in this case consisting of an elastic foil 28.

The bending line 26 thus defines two parts of the plate 30, a first of which defines a first printed circuit (PCB), part 29a, and the second of which defines a second printed circuit (PCB), part 29b.

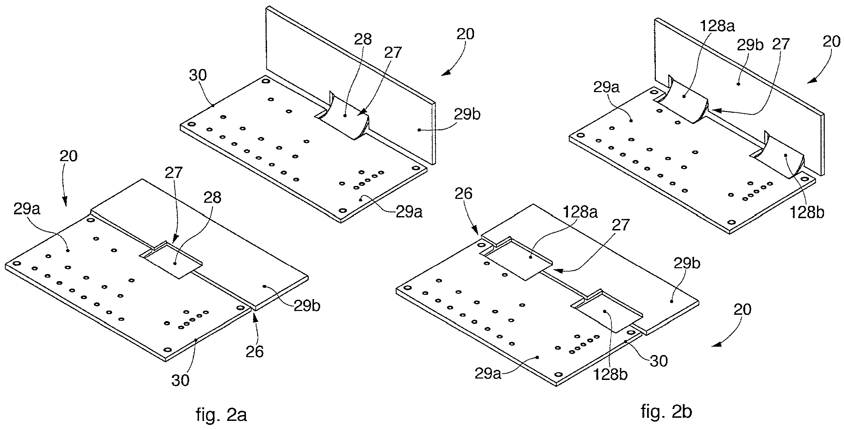

The variant in fig. 2b shows the same solution in which, instead of a single elastic foil 28 disposed centrally, there are two elastic foils 128a and 128b disposed substantially symmetrical with respect to a median axis of the plate 30.

As shown in fig. 3a, using the plate 30 in two parts, which has the flexible bending means 27, it is possible to carry out all the operations of mounting and assembling the components in a single line, avoiding duplicating times and the mounting and assembly steps, and with the plate 30 disposed in a single plane. Once all the components are assembled both on part 29a and on part 29b, the two parts can be bent by 90° with respect to each other (fig. 3b), to define the block of printed circuits to be inserted into the containing part.

As can be seen in fig. 4, the assembly operation is concluded by inserting the printed circuit with its part 29a disposed, during use, substantially horizontal inside the box-like container 16 and its part 29b, on which the electric and electronic components intended for the display are mounted, disposed during use substantially vertical and parallel, facing and in proximity to the viewer 13 of the front-piece 11.

It is clear that modifications and/or additions of parts may be made to the electronic measuring, conditioning and regulating instrument as described heretofore, without departing from the field and scope of the present invention.

It is also clear that, although the present invention has been described with reference to some specific examples, a person of skill in the art shall certainly be able to achieve many other equivalent forms of electronic measuring, conditioning and regulating instrument, having the characteristics as set forth in the claims and hence all coming within the field of protection defined thereby.

## Claims

1. Electronic measuring, conditioning and regulating instrument, comprising a display front-piece (11) with a viewer (13), a box-like container (16), a first PCB associated to the front-piece (11) and disposed during use substantially parallel and in proximity thereto, and a second PCB disposed during use inside the box-like container (16) and substantially orthogonal to the first PCB, **characterized in that** said first and second PCB are made starting from a single plate (30) made in two parts (29a, 29b) and comprising, in an intermediate zone thereof, flexible bending means (27) which allow, during use, to bend the first PCB with respect to the second PCB along at least a bending line (26) so as to define the positions of use, orthogonal with respect to each other, of said first and second PCB.

2. Electronic instrument as in claim 1, **characterized in that** the second PCB is a smaller size and has a position of use that is normally vertical, facing and in proximity to the viewer (13), while the first PCB is bigger and positioned inside the box-like container (16) in order to support at least the power and/or feed components.

3. Electronic instrument as in claim 1 or 2, **characterized in that** said plate (30) has two or more bending lines to define, during use, three distinct PCBs bent with respect to each other.

4. Electronic instrument as in any claim hereinbefore, **characterized in that** the flexible bending means (27) consist of an elastic foil (28) disposed substantially centrally along the bending line (16) which defines the first and the second PCB.

5. Electronic instrument as in any claim hereinbefore, **characterized in that** the flexible bending means (27) consist of two or more elastic foils (128a, 128b) disposed along the bending line (16).

6. Method to make an electronic measuring, conditioning and regulating instrument, comprising a display front-piece (11) with a viewer (13), a box-like container (16), a first PCB associated to the front-piece (11) and disposed during use substantially parallel and in proximity thereto, and a second PCB, disposed during use inside the box-like container (16) and substantially orthogonal to the first PCB, **characterized in that** it comprises the following steps:
- supplying a plate (30) made in two parts (29a, 29b) and comprising, in an intermediate zone thereof, flexible bending means (27) to define a bending line (26);
- carrying out the operations of mounting and assembling electronic and electric components on said two parts (29a, 29b) with said plate (30) disposed in a single plane;
- bending said two parts (29a, 29b) with respect to each other along said bending line (26);
- assembling said plate (30) with the parts (29a, 29b) bent with respect to each other, inserting the part (29a) inside the box-like container (16) and the part (29b) facing and in proximity to the viewer (13) of the front-piece (11).

## Patentansprüche

1. Elektronisches Mess-, Konditionierung- und Regelungsinstrument, umfassend ein Anzeige-Frontteil (11) mit einem "Viewer" (13), einen boxartigen Container (16), einen ersten PCB (Leiterplatte) assoziiert mit dem Frontteil (11) und während des Gebrauchs im Wesentlichen parallel und in der Nähe dazu angeordnet, und einen zweiten PCB (Leiterplatte), während des Gebrauchs innerhalb des boxartigen Containers (16) angeordnet und im Wesentlichen senkrecht zum ersten PCB, **dadurch gekennzeichnet, dass** der erste und zweite PCB bereitgestellt werden, beginnend mit einer einzigen Platte (30), die in zwei Teilen (29a, 29b) bereitgestellt wird und umfassend, in einem Zwischenbereich davon, flexible Beugemittel (27), welche es während des Gebrauchs erlauben, den ersten PCB gegenüber dem zweiten PCB entlang mindestens einer Beugelinie (26) zu beugen, um die Positionen beim Gebrauch, senkrecht zueinander, des ersten und zweiten PCBs zu definieren.

2. Elektronisches Instrument nach Anspruch 1, **dadurch gekennzeichnet, dass** der zweite PCB eine kleinere Größe hat und eine Position während des Gebrauchs einnimmt, die normal vertikal ausgerichtet auf und in der Nähe des Viewers (13) ist, während der erste PCB größer ist und innerhalb des boxartigen Containers (16) positioniert ist, um mindestens einen von den Strom- und/oder Zufuhrkomponenten zu tragen.

3. Elektronisches Instrument nach Anspruch 1 oder 2, **dadurch gekennzeichnet, dass** die Platte (30) zwei oder mehr Beugelinien hat, die, während des Gebrauchs, drei verschiedene PCBs, jeweils zueinander gebeugt, definieren.

4. Elektronisches Instrument nach einem der vorgenannten Ansprüche, **dadurch gekennzeichnet, dass** die flexiblen Beugemittel (27) aus einer elastischen Folie (28) bestehen, die im Wesentlichen zentral entlang der Beugelinie (16) angeordnet ist, welche den ersten und den zweiten PCB definiert.

5. Elektronisches Instrument nach einem der vorgenannten Ansprüche, **dadurch gekennzeichnet, dass** die flexiblen Beugemittel (27) aus zwei oder mehr elastischen Folien (128a, 128b) bestehen, die entlang der Beugelinie (16) angeordnet sind.

6. Verfahren zur Herstellung eines elektronischen Mess-, Konditionierungs- und Regelungsinstruments, umfassend ein Anzeige-Frontteil (11) mit einem Viewer (13), einen boxartigen Container (16), einen ersten PCB assoziiert mit dem Frontteil (11) und während des Gebrauchs im Wesentlichen parallel und in der Nähe dazu angeordnet, und einen zweiten PCB, angeordnet während des Gebrauchs innerhalb des boxartigen Containers (16) und im Wesentlichen senkrecht zum ersten PCB, **dadurch gekennzeichnet, dass** es die folgenden Schritte umfasst:
- Bereitstellen einer Platte (30), die in zwei Teilen (29a, 29b) bereitgestellt wird und umfassend, in einem Zwischenbereich davon, flexible Beugemittel (27), um eine Beugelinie (26) zu definieren;
- Ausführen von Operationen des Befestigens und des Zusammenführens elektronischer und elektrischer Komponenten auf den zwei Teilen (29a, 29b) mit dieser Platte (30), angeordnet in einer einzigen Ebene;
- Beugen dieser zwei Teile (29a, 29b) jeweils zueinander entlang dieser Beugelinie (26);
- Zusammenführen dieser Platte (30) mit den Teilen (29a, 29b), jeweils gebeugt zueinander, Einführen des Teils (29a) innerhalb des boxartigen Containers (16) und des Teils (29b), ausgerichtet auf und in der Nähe zum Viewer (13) des Frontteils (11).

## Revendications

1. Instrument électronique de mesure, de conditionnement, et de régulation, comprenant une façade d'affichage (11) pourvue d'une visionneuse (13), une enceinte en forme de boîte (16), une première carte de circuit imprimé associée à la façade (11) et disposée, pendant l'emploi, sensiblement parallèle et à proximité de celle-ci, et une deuxième carte de circuit imprimé disposée, pendant l'emploi, à l'intérieur de l'enceinte en forme de boîte (16), sensiblement perpendiculaire à la première carte de circuit imprimé, **caractérisé en ce que** ladite première et ladite deuxième carte de circuit imprimé sont formées à partir d'une plaque unique (30) faite de deux parties (29a, 29b) et comprenant, dans une zone intermédiaire de celle-ci, des moyens de flexion souple (27) qui permettent, pendant l'emploi, de plier la première carte de circuit imprimé par rapport la deuxième carte de circuit imprimé selon au moins une ligne de flexion (26) de façon à définir les positions d'emploi, perpendiculaires l'une par rapport à l'autre, de ladite première et de ladite deuxième carte de circuit imprimé.

2. Instrument électronique selon la revendication 1, **caractérisé en ce que** la deuxième carte de circuit imprimé est plus petite et a une position d'emploi qui est normalement verticale, opposée et à proximité de la visionneuse (13), alors que la première carte de circuit imprimé est plus grande et se trouve à l'intérieur de l'enceinte en forme de boîte (16) pour supporter au moins les composants de puissance et/ou d'alimentation.

3. Instrument électronique selon la revendication 1 ou 2, **caractérisé en ce que** ladite plaque (30) comporte deux ou plusieurs lignes de flexion pour définir, pendant l'emploi, trois cartes de circuit imprimé distinctes pliées l'une par rapport à l'autre.

4. Instrument électronique selon n'importe laquelle des revendications précédentes, **caractérisé en ce que** les moyens de flexion souple (27) sont constitués d'une lamelle élastique (28), situé en position sensiblement centrale le long de la ligne de flexion (16) qui définit la première et la deuxième carte de circuit imprimé.

5. Instrument électronique selon importe laquelle des revendications précédentes, **caractérisé en ce que** les moyens de flexion souple (27) sont constitués de deux ou plusieurs lamelles élastiques (128a, 128b) situées le long de la ligne de flexion (16).

6. Procédé de fabrication d'un instrument électronique de mesure, de conditionnement, et de régulation, comprenant une façade d'affichage (11) pourvue d'une visionneuse (13), une enceinte en forme de boîte (16), une première carte de circuit imprimé associée à la façade (11) et disposée, pendant l'emploi, sensiblement parallèle et à proximité de celle-ci, et une deuxième carte de circuit imprimé disposée, pendant l'emploi, à l'intérieur de l'enceinte en forme de boîte (16), et sensiblement perpendiculaire à la première carte de circuit imprimé, **caractérisé en ce qu'**il comprend les étapes suivantes :
- fournir une plaque (30) faite en deux parties (29a, 29b) et comprenant, dans une zone intermédiaire de celle-ci, des moyens de flexion souple (27) pour définir une ligne de flexion (26) ;
- effectuer les opérations de montage et d'assemblage des composants électroniques et électriques desdites deux parties (29a, 29b) avec ladite plaque (30) disposée sur un seul plan ;
- plier lesdites deux parties (29a, 29b) l'une par rapport à l'autre le long de ladite ligne de flexion (26) ;
- assembler ladite plaque (30) avec les parties (29a, 29b) pliées l'une par rapport à l'autre, insérer la partie (29a) à l'intérieur de l'enceinte en forme de boîte (16) et la partie (29b) opposée et à proximité de la visionneuse (13) de la façade (11).
